# EUROPÄISCHE PATENTSCHRIFT

(11) **EP 2 385 262 B1**
(45) Veröffentlichungstag und Bekanntmachung des Hinweises auf die Patenterteilung: **11.09.2013**
(21) Anmeldenummer: 11161893.0
(22) Anmeldetag: 11.04.2011
(51) Int. Cl.: F16B 37/08

(54) **Mutter für Verschraubungen, nämlich segmentierte Mutter**
Nut for screw connections, namely segmented nut
Ecrou pour vissages, notamment écrou segmenté

(30) Priorität: 03.05.2010 DE 102010016758
(43) Veröffentlichungstag der Anmeldung: 09.11.2011
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Christophersen & Partner

(56) Entgegenhaltungen:
- EP-A1- 0 408 239
- WO-A1-00/65243
- WO-A1-03/025405
- WO-A1-2008/136903
- US-A- 3 147 662

## Beschreibung

Die Erfindung betrifft eine Mutter für Verschraubungen, die sich aus zwei im Wesentlichen gleich großen, halbschalenförmigen Segmenten zusammensetzt, die jeweils innenseitig mit Innengewindesegmenten versehen und bis zum Erreichen einer Schließstellung aufeinander zu beweglich angeordnet sind, mit Mitteln zur Aufrechterhaltung der Schließstellung der Segmente, mit einer an zumindest einem der beiden Segmente beweglich angeordneten, von Hand greifbaren Betätigungseinrichtung zum Aufheben der Schließstellung, und mit mindestens zwei Bolzen zur Führung der Segmente in zueinander paralleler Ausrichtung, wobei mindestens ein erster Bolzen auf der einen, und mindestens ein zweiter Bolzen auf der anderen Seite der Verschraubung angeordnet ist.

Eine aus zwei Segmenten aufgebaute Mutter mit diesen Merkmalen ist aus der WO 03/025405 A1 bekannt. Teilweise ähnliche Muttern sind in der US 3,147,662 und in der WO 2008/136903 A1 beschrieben.

Segmentierte Muttern für den Einsatz auf Schrauben oder Gewindebolzen sind auch sonst aus dem Stand der Technik bekannt. Zum Beispiel beschreibt die PCT WO2005/123345 A1 in den Figuren 9C - 9F eine segmentierte Mutter aus insgesamt drei gleichen Segmenten. Diese sind nach Art von Backen gestaltet und lassen sich durch Betätigung eines um die Mittelachse der Mutter drehbaren Drehrings zwischen einer Öffnungsstellung und einer Schließstellung betätigen, wobei die Backen eine radiale Bewegung ausführen. In der Schließstellung greifen innen an den Segmenten ausgebildete Innengewindesegmente in das entsprechend dimensionierte Außengewinde eines Gewindebolzens ein. In der Öffnungsstellung sind die an den Segmenten ausgebildeten Innengewindeabschnitte ohne Eingriff in das Außengewinde.

Die segmentierte Mutter nach der PCT WO 2005/123345 A1 ist im Hinblick auf die spezielle Anwendung in einer Gewindebolzen-Spanneinrichtung ausgelegt und konstruiert. Für viele andere Anwendungen auf dem Gebiet des Anlagen- und Apparatebaus hingegen ist diese segmentierte Mutter weniger geeignet, insbesondere wegen des für viele bauliche Situationen der Praxis ungeeigneten Antriebs über einen koaxial zur Mutter angeordneten Drehring.

Aus der DE 1 991 256 U ist eine Mutter für Verschraubungen mit zwei im Wesentlichen gleich gestalteten Segmenten bekannt, die zueinander schwenkbar, und hierzu in einem ersten Endbereich schwenkbeweglich miteinander verbunden sind. Für einen auch unter Belastung sicheren Formschluss mit dem Gewinde einer Gewindestange wird die Mutter zunächst bei geöffneten Segmenten möglichst weit auf das Gewinde geschoben und die Segmente geschlossen. Anschließend wird die Mutter einige Gewindedrehungen geschraubt, wodurch ein zylindrisch gestalteter Längsabschnitt der Mutter in eine sacklochartig gestaltete Gegenaufnahme gelangt und ein Öffnen der Segmente fortan ausgeschlossen ist. Die sacklochartig gestaltete Gegenaufnahme dient also als ein Schließmittel, welches das Öffnen der Segmente verhindert. Von Nachteil ist, dass erst durch das Verschrauben um mehrere Gewindegänge ein Verschluss der Mutter erreicht wird.

Aus der DE 83 08 905 U1 ist eine für eine axiale Schnellverstellung geeignete Mutter bekannt. Diese setzt sich aus einem Gehäuse mit einem darin entgegen einer Federkraft auslenkbaren Ring zusammen. Der Ring ist auf seiner einen Innenhälfte mit einer Gewindestruktur versehen. Eine Druckfeder beaufschlagt den Ring in radialer Richtung, wodurch es zum Formschluss der Gewindestruktur mit dem Außengewinde des Gewindebolzens kommt. Zum Öffnen, d. h. zum Aufheben des Gewindeeingriffs, dient ein schwenkbarer Hebel, der auf einer rechtwinklig zur Verschraubungsachse angeordneten Schwenkachse im Gehäuse gelagert ist. Das Betätigen des Hebels führt zu einem radialen, d. h. seitlichen Versatz des Rings und einem Aufheben des Gewindeeingriffs.

Der Erfindung liegt die **Aufgabe** zugrunde, eine segmentierte Mutter zu schaffen, die für vielfältige Anwendungen im Anlagen- und Apparatebau besonders schnell zwischen der Schließ- und der Öffnungsstellung veränderbar ist.

Zur **Lösung** wird bei einer Mutter mit den eingangs angegebenen Merkmalen vorgeschlagen, dass die Bolzen durch ein gemeinsames Arretierelement als Betätigungseinrichtung arretierbar sind, welches zwischen den Bolzen in dem einen der beiden Segmente beweglich angeordnet ist.

Die beiden Segmente bzw. Backen der Segmentmutter werden in zueinander paralleler Ausrichtung zueinander verfahren, wodurch sich bereits durch einen kurzen Weg von der Schließstellung in die Öffnungsstellung eine Trennung der Innengewindesegmente von dem korrespondierenden Außengewinde erzielen lässt. In der Praxis lässt sich eine solche Segmentmutter besonders einfach und schnell bedienen, d. h. durch einen einzigen Betätigungsgriff. Ein wichtiges Anwendungsbeispiel aus der Praxis sind z. B. Flanschverschraubungen an Gehäusen oder Fundamenten von Windkraftanlagen. Die dort verwendeten Befestigungsflansche sind über ihren Umfang mit dicht aufeinander folgenden Verschraubungen versehen, so dass zwischen den einzelnen Verschraubungen, aber auch nach innen zu dem Gehäuse oder Fundament hin, nur sehr wenig Platz ist. Lediglich nach außen hin liegt die Verschraubung frei und bietet dort eine gewisse Zugänglichkeit, um die Mutter mittels der daran ausgebildeten Betätigungseinrichtung von der Schließ- in die Öffnungsstellung zu überführen.

Vorteilhafte Ausgestaltungen der erfindungsgemäßen Mutter sind in den Unteransprüchen angegeben.

Ein Ausführungsbeispiel der Erfindung wird im Folgenden unter Bezugnahme auf die Zeichnungen beschrieben. Es zeigen:
- Fig. 1: in perspektivischer Darstellung eine nicht unter die Erfindung fallende, aus zwei Segmenten aufgebauten Mutter, wobei diese in ihrem geöffneten Zustand dargestellt ist;
- Fig. 2: die Mutter nach Fig. 1 in einer Seitenansicht;
- Fig. 3: die Mutter nach Fig. 1 in einer Draufsicht, wobei Einzelheiten im Inneren der Segmente gestrichelt dargestellt sind;
- Fig. 4: in einer Schnittdarstellung ein erfindungsgemäßes Ausführungsbeispiel einer aus zwei Segmenten aufgebauten Mutter, wobei diese in geschlossenem Zustand dargestellt ist;
- Fig. 5: einen Schnitt durch die Mutter entlang der in Fig. 4 eingetragenen Schnittebene V-V;
- Fig. 6: eine Schnittdarstellung wie in Fig. 4, aber in geschlossenem Zustand der Mutter, und
- Fig. 7: einen Schnitt wie in Fig. 5, aber in geschlossenem Zustand der Mutter.

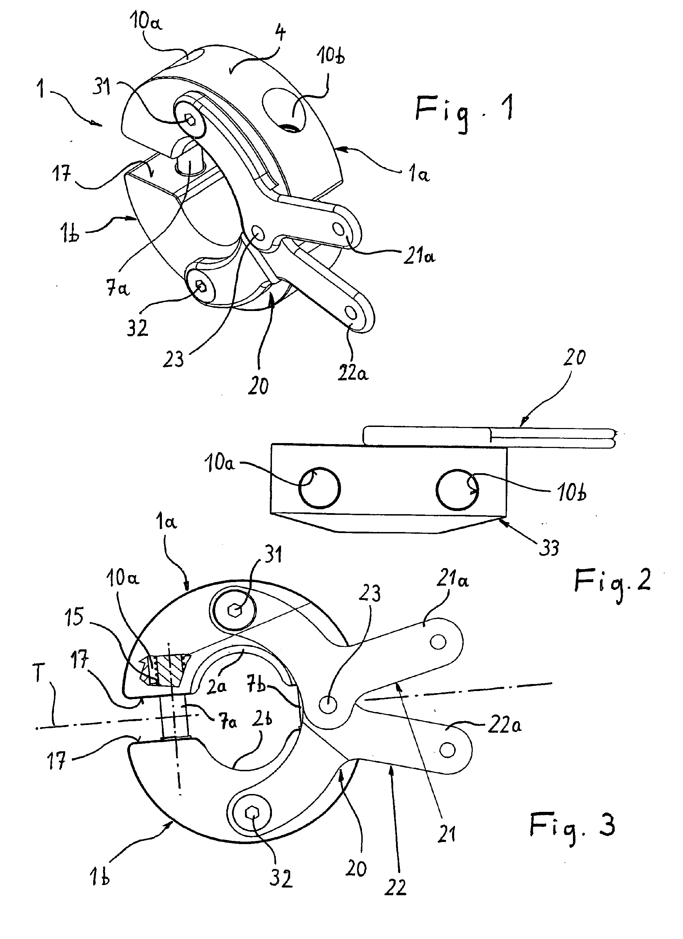

Die in den Figuren 1 - 3 dargestellte Segmentmutter besteht aus zwei parallel aufeinander zu und voneinander weg beweglichen Backen bzw. Segmenten 1a, 1b von jeweils etwa 180° Umfang. Ein Trennen bzw. Öffnen der Segmente 1a,1b wie in den Figuren 1 - 3 dargestellt bewirkt ein Öffnen auch der daran jeweils ausgeformten Innengewindesegmente 2a, 2b, so dass sich die so geöffnete Mutter über einen Gewindebolzen oder eine Schraube in axialer Richtung bis zu einer gewünschten Längsposition auf dem Gewinde bewegen lässt, ohne dass ein mühsames Aufschrauben entlang der ganzen Gewindelänge des Gewindebolzens oder der Schraube erforderlich wäre. Auch auf sehr langen Gewindebolzen lässt sich die Mutter daher sehr schnell in der gewünschten Längsposition platzieren und dann, durch Schließen der zwei Backen, formschlüssig auf dem Gewindebolzen festlegen.

Grundsätzlich sind zwei verschiedene Ausführungen möglich. Bei der ersten Ausführung ergänzen sich die beiden Innengewindesegmente 2a, 2b bei geschlossener Mutter zu einem vollständigen Norminnengewinde. Eine solche Mutter lässt sich daher in ihrer Schließstellung wie jede andere Schraubenmutter verschrauben.

Bei einer zweiten Ausführung ergänzen sich die beiden Innengewindesegmente 2a, 2b in der Schließstellung der Mutter zu einem klemmenden Gewinde, dessen Gewindeflanken an den korrespondierenden Gewindeflanken des Gewindebolzens oder der Schraube reibschlüssig festklemmen. Eine solche Mutter lässt sich in ihrer Schließstellung nicht oder nur unter Anwendung eines hohen Drehmomentes auf dem korrespondierenden Außengewinde verdrehen. Der Grundaufbau der Mutter ist bei beiden Ausführungen derselbe.

Die beiden Segmente 1a, 1b haben halbkreisförmige Außenflächen 4 und stoßen in der Schließstellung der Mutter in einer Trennebene T (Fig. 3) aneinander. Bei geöffneter Mutter erweitert sich diese Trennebene T zu einem Trennspalt von z. B. 5 bis 10 mm.

Zur Erzielung einer Parallelführung der zwei Segmente 1a,1b sitzen diese gleitbeweglich auf Bolzen 7a, 7b, die sich rechtwinklig zu der Trennebene T erstrecken. Hierzu sitzt der Bolzen 7a längsbeweglich in zueinander fluchtenden Bohrungen 10a der Segmente, und der Bolzen 7b sitzt längsbeweglich in zueinander fluchtenden Bohrungen 10b der Segmente. Gegen die Enden der Bolzen 7a, 7b stützen sich Schraubenfedern 15 ab, die sich andererseits, zur Trennebene T hin, gegen eine am Boden der jeweiligen Bohrung 10a, 10b ausgebildete Axialfläche abstützen. Die Axialfläche kann eine Schulter der hier zweistufigen Bohrung 10a, 10b sein. Jeder der beiden Bolzen 7a, 7b ist im Bereich seiner beiden Enden mit jeweils einer solchen, den Bolzen umgebenden Feder 15 versehen. Ergebnis dieser Anordnung der Federn 15 ist eine dauernde Vorspannung auf die Segmente 1a, 1b im Schließsinne. Entgegen der in den Figuren 1 - 3 dargestellten Öffnungsstellung sind die Segmente 1a,1b aufgrund der Wirkung der Federn 15 normalerweise geschlossen, d. h. sie stoßen in der Trennebene T mit ihren Flachseiten 17 entweder aneinander an, oder weisen nur einen geringen Abstand zueinander auf.

Die so in Schließrichtung federbelasteten Backen 1a,1b lassen sich von Hand mittels einer Betätigungseinrichtung 20 öffnen, d. h. entgegen der Federkraft voneinander entfernen, bis die innen an den Segmenten 1a, 1b angeformten Innengewindesegmente 2a, 2b den Formschluss mit dem Außengewinde, auf welchem die Mutter sitzt, verlieren.

Die Betätigungseinrichtung 20 ist hier als Spreizeinrichtung ausgestaltet und besteht aus zwei in einem Gelenk 23 miteinander verbundenen Hebeln 21, 22. Das Gelenk 23 ist, wie Figur 3 erkennen lässt, in der Trennebene T der beiden Segmente angeordnet. Die in dem Gelenk 23 verbundenen Hebel 21, 22 bilden ein zangenartiges Betätigungselement mit zwei V-förmig zueinander angewinkelten, nach außen weisenden Betätigungsgriffen 21a, 22a sowie über das Gelenk 23 hinaus verlängerten Hebelabschnitten, die gelenkig in Drehlagern 31, 32 in den Segmenten enden. Das Drehlager 31 des ersten Hebels 21 befindet sich auf der Symmetriemitte des Segments 1a, das Drehlager 32 des zweiten Hebels 22 befindet sich auf der Symmetriemitte des Segments 1b.

Werden durch Zupacken der Hand des Bedieners die V-förmig stehenden Betätigungsgriffe 21a, 22a zueinander hin bewegt, führt dies über die Drehlager 23, 31, 32 zu einer Bewegung der Segmente 1a, 1b voneinander weg, und damit zu einem Aufheben des Formschlusses zum Gewindebolzen. Sobald die Betätigungsgriffe 21a, 22a der Betätigungseinrichtung losgelassen werden, schließen sich unter dem Einfluss der Federn 15 die Segmente 1a, 1b wieder und greifen formschlüssig in den Gewindebolzen ein, so dass die Segmentmutter auf dem Gewindebolzen lagegesichert ist.

Figur 2 lässt erkennen, dass die Segmentmutter für eine bessere Zentrierung auf der jeweiligen Unterlage an ihrer Unterseite, d. h. der der Betätigungseinrichtung 20 abgewandten Seite, konisch gestaltet ist. Die Unterseite ist in Form eines flachen Kegelstumpfes gestaltet, wobei sich die Konusfläche 33 zur Hälfte auf das eine, und zur anderen Hälfte auf das andere Segment verteilt.

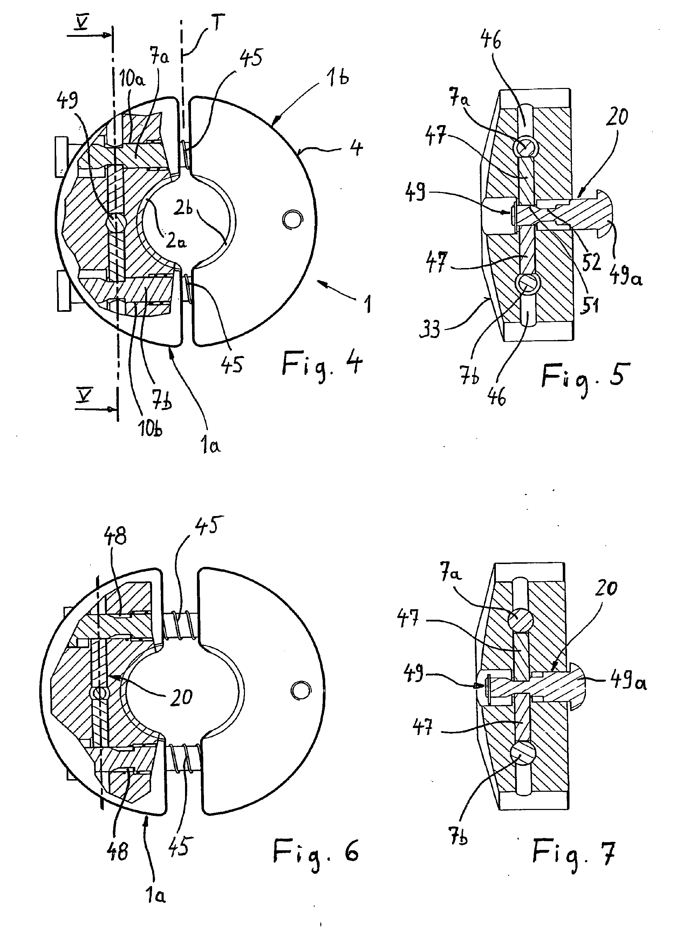

Auch bei der erfindungsgemäßen Ausführungsform nach den Figuren 4-7 sind die beiden Segmente 1a, 1b mittels Bolzen 7a, 7b, von denen sich der eine Bolzen 7a auf der einen, und der andere Bolzen 7b auf der anderen Seite der Verschraubung befindet, zueinander geführt, so dass die Segmente parallel aufeinander zu und voneinander weg beweglich sind.

Jeder Bolzen 7a, 7b ist auf einem mittleren Längsabschnitt von einer als Schraubenfeder gestalteten Druckfeder 45 umgeben. Die Enden der Druckfeder 45 stützen sich jeweils gegen Axialflächen des ersten Segments 1a bzw. des zweiten Segments 1b ab. Infolge dessen kommt es durch die Vorspannung der Druckfedern 45 zu einer dauernden Beaufschlagung der Segmente 1a,1b in einem Öffnungssinne. Dies ist ein Unterschied zu der voranstehend beschriebenen ersten Ausführungsform, bei der die Federn die beiden Backen im Schließsinne beaufschlagen.

Bei der erfindungsgemäßen Ausführungsform nach den Figuren 4 - 7 ist die Betätigungseinrichtung 20 als Sperreinrichtung ausgestaltet. Die Segmente 1a,1b sind in ihrem Schließzustand unter Vorspannung von Federn 45 arretiert. Diese Arretierung ist durch einen einmaligen Druck auf eine Taste 49 aufhebbar, wobei sich unter der Kraft der entspannenden Federn die Segmente voneinander entfernen, d.h. öffnen.

Bestandteil der Betätigungseinrichtung 20 ist ein nur in dem einen Segment 1a ausgebildeter Querkanal 46, welcher rechtwinklig die Bohrungen 10a, 10b schneidet, in denen die die Segmente 1a, 1b zueinander führenden Bolzen 7a, 7b sitzen.

Der Querkanal 46 nimmt als weitere Bestandteile der Betätigungseinrichtung 20 schiebebeweglich zwei Sperrstifte 47 auf, die den jeweiligen Bolzen 7a, 7b zu sperren, d. h. zu arretieren vermögen. Hierzu ist jeder Bolzen 7a, 7b an seiner Mantelfläche mit einer Ausnehmung 48 oder einem Absatz versehen, in die bzw. in den in arretiertem Zustand der jeweilige Sperrstift 47 formschlüssig eingreift. Die Ausnehmung 48 verläuft, wie Fig. 6 erkennen lässt, rampenförmig.

Die zwei Sperrstifte 47 sind hinsichtlich ihrer Längsbeweglichkeit in dem Querkanal 46 durch Eingriff in ein gemeinsames Arretierelement 49 verriegelbar, welches mittig zwischen den Bolzen angeordnet ist und quer zu den Sperrstiften 47 beweglich in dem Segment 1a angeordnet ist. Auch das Arretierelement 49 ist Bestandteil der Betätigungseinrichtung.

Das Arretierelement 49 ist nach Art eines Bolzens gestaltet, mit über seine Länge unterschiedlichen Querschnitten 51, 52. An einen ersten, größeren Querschnitt 51 schließt sich ein demgegenüber verjüngter, zweiter Querschnitt 52 an. Der verjüngte Querschnitt 52 dient als Freigabeabschnitt. Außen, d.h. außerhalb des Segments 1a, ist das Arretierelement 49 zu einer Drucktaste 49a erweitert. Die Drucktaste 49a befindet sich auf der dem Konus 33 abgewandten Seite der Segmentmutter 1a.

Die erfindungsgemäße Mutter gemäß den Figuren 4 - 6 wird auf einem Gewindebolzen geschlossen, indem die Segmente 1a,1b von Hand aufeinander zu bewegt werden, bis es zu einem Einrasten der Bolzen 7a, 7b an den Sperrstiften 47 kommt. In dieser Sperrstellung sind die Sperrstifte 47 ihrerseits durch ihr axiales Abstützen an dem erweiterten Querschnitt 51 des Arretierelements 49 längsgesichert.

Zum schnellen Öffnen der Mutter wird, z. B. durch Daumendruck, die Drucktaste 49a des Arretierelements 49 zum Segment 1a hin niedergedrückt, wodurch sich das Arretierelement 49 verschiebt und der andere, als Freigabeabschnitt dienende Querschnitt 52 die zuvor an dem Querschnitt 51 abgestützten beiden Sperrstifte 47 freigibt. Diese bewegen sich aufeinander zu, und ihre jeweils anderen Enden geben die Bolzen 7a, 7b frei. Die Freigabebewegung der Sperrstifte 47 wird noch durch die an den Ausnehmungen 48 ausgebildeten Rampen unterstützt. Unter dem Einfluss der Federn 45 öffnet sich die Mutter, d. h. sie springt auf.

Bei beiden Ausführungsformen kann sich an der halbrunden Außenfläche 4 der Segmente 1a, 1b eine Verankerung für ein Befestigungselement, z. B. eine Ringöse befinden. Die Mutter wird in der Nähe eines hydraulischen Schraubenspannzylinders, dessen Wegfliegen bei seiner Betätigung verhindert werden soll, auf dem in Umfangsrichtung benachbarten Schraubenbolzen befestigt. Ein an der Ringöse befestigter Gurt dient als Sicherheitsgurt. Für die ausreichende Festlegung dieses Sicherheitsgurtes ist es daher nicht erforderlich, die Mutter zunächst unter vielen Umdrehungen auf das Außengewinde des benachbarten Schraubenbolzens aufzuschrauben. Vielmehr wird die Mutter lediglich geöffnet, in geöffnetem Zustand in Längsrichtung auf das vorhandene Gewinde geschoben, und dann geschlossen. Umgekehrt ist zum Lösen der Mutter nur ein einziger Betätigungsgriff erforderlich, also im ersten Fall ein Aufspreizen der Segmente 1a, 1b und im zweiten Fall ein Druck auf die Drucktaste mit der Folge eines Aufspringens der beiden Segmente 1a,1b.

### Bezugszeichenliste

- 1: Mutter
- 1a: Segment
- 1b: Segment
- 2a: Innengewindesegment
- 2b: Innengewindesegment
- 4: Außenfläche
- 7a: Bolzen
- 7b: Bolzen
- 10a: Bohrung
- 10b: Bohrung
- 15: Feder
- 17: Flachseite
- 20: Betätigungseinrichtung
- 21: Hebel
- 21a: Betätigungsgriff
- 22: Hebel
- 22a: Betätigungsgriff
- 23: Gelenk
- 31: Drehlager
- 32: Drehlager
- 33: Konus
- 45: Druckfeder
- 46: Querkanal
- 47: Sperrstift
- 48: Ausnehmung
- 49: Arretierelement
- 49a: Drucktaste
- 51: Querschnitt
- 52: Querschnitt
- T: Trennebene

## Patentansprüche

1. Mutter für Verschraubungen, die sich aus zwei im Wesentlichen gleichgroßen, halbschalenförmigen Segmenten (1a, 1b) zusammensetzt, die jeweils innenseitig mit Innengewindesegmenten (2a, 2b) versehen und bis zum Erreichen einer Schließstellung aufeinander zu beweglich angeordnet sind, mit Mitteln (47, 49) zur Aufrechterhaltung der Schließstellung der Segmente (1a, 1b), mit einer an zumindest einem (1a) der beiden Segmente (1a, 1b)beweglich angeordneten, von Hand greifbaren Betätigungseinrichtung zum Aufheben der Schließstellung, und mit mindestens zwei Bolzen (7a, 7b) zur Führung der Segmente (1a, 1b) in zueinander paralleler Ausrichtung, wobei mindestens ein erster Bolzen (7a) auf der einen, und mindestens ein zweiter Bolzen (7b) auf der anderen Seite der Verschraubung angeordnet ist, **dadurch gekennzeichnet, dass** die Bolzen (7a, 7b) durch ein gemeinsames Arretierelement (49) als Betätigungseinrichtung arretierbar sind, welches zwischen den Bolzen (7a, 7b) in dem einen der beiden Segmente beweglich angeordnet ist.

2. Mutter nach Anspruch 1, **dadurch gekennzeichnet, dass** die Segmente (1a, 1b) in Öffnungsrichtung durch Federn (45) belastet sind.

3. Mutter nach Anspruch 2 oder 3, **dadurch gekennzeichnet, dass** mindestens eine erste Feder (45) auf der einen, und mindestens eine zweite Feder (45) auf der anderen Seite der Verschraubung angeordnet ist.

4. Mutter nach einem der Ansprüche 2 bis 4, **dadurch gekennzeichnet, dass** die Federn (45) in Bohrungen (10a, 10b) der Segmente sitzende Schraubenfedern sind, und dass sich die Federn mit einem Ende gegen eine an dem Segment ausgebildete Axialfläche, z. B. eine Schulter, abstützen.

5. Mutter nach Anspruch 4 oder 5, **dadurch gekennzeichnet, dass** die Federn (45) auf den Bolzen (7a, 7b) sitzen, und dass die Bolzen (7a, 7b) Bestandteil einer Parallelführung der Segmente (1 a, 1 b) sind.

6. Mutter nach einem der vorangehenden Ansprüche, **dadurch gekennzeichnet, dass** das Arretierelement (49) außerhalb des Segments (1a) mit einer Drucktaste (49a) versehen ist.

7. Mutter nach einem der vorangehenden Ansprüche, **gekennzeichnet durch** in einem Querkanal (46) des Segments (1a) schiebebeweglich angeordnete Sperrstifte (47), die mit ihrem einen Ende in das Arretierelement (49), und mit ihrem anderen Ende in den jeweiligen Bolzen (7a, 7b) eingreifen.

## Claims

1. A nut for screw fastenings which is formed from two segments (1a, 1b) in the shape of half shells and of substantially equal size which are provided on the inside with inter-nally threaded segments (2a, 2b) in each case and are arranged so as to be movable towards each other until reaching a closed setting, with means (47, 49) for maintaining the closed setting of the segments (1a, 1b), with an actuating device arranged so as to be movable on at least one (1a) of the two segments (1a, 1b) and capable of being gripped manually for discontinuing the closed setting, and with at least two pins (7a, 7b) for guiding the segments (1a, 1b) in an orientation parallel to each other, wherein at least one first pin (7a) is arranged on one side of the screw fastening and at least one second pin (7b) is arranged on the other side, **characterized in that** the pins (7a, 7b) are capable of being locked by a common locking element (49) as an actuating device, which is arranged so as to be movable between the pins (7a, 7b) in one of the two segments.

2. A nut according to Claim 1, **characterized in that** the segments (1a, 1b) are stressed by springs (45) in the opening direction.

3. A nut according to Claim 2 or 3 [*sic*], **characterized in that** at least one first spring (45) is arranged on one side of the screw fastening and at least one second spring (45) is arranged on the other side.

4. A nut according to any one of Claims 2 to 4 [*sic*], **characterized in that** the springs (45) are helical springs mounted in bores (10a, 10b) in the segments, and the springs are supported at one end against an axial face, for example a shoulder, formed on the segment.

5. A nut according to Claim 4 or 5 [*sic*], **characterized in that** the springs (45) are mounted on the pins (7a, 7b), and the pins (7a, 7b) are a component part of a parallel guide of the segments (1a, 1b).

6. A nut according to any one of the preceding Claims, **characterized in that** the locking element (49) is provided with a push button (49a) outside the segment (1a).

7. A nut according to any one of the preceding Claims, **characterized by** lock pins (47) which are arranged so as to be displaceably movable in a transverse channel (46) in the segment (1a) and which engage with one of their ends in the locking element (49) and with the other of their ends in the respective pin (7a, 7b).

## Revendications

1. Écrou pour vissages, qui se compose de deux segments (1a, 1b) en forme de demi-coques sensiblement de la même taille, qui sont chacun dotés sur leur côté intérieur de segments filetés intérieurs (2a, 2b) et sont agencés de façon à être mobiles l'un par rapport à l'autre jusqu'à ce qu'une position de fermeture soit atteinte, comprenant des moyens (47, 49) destinés à maintenir la position fermée des segments (1a, 1b), comprenant un dispositif d'actionnement pouvant être saisi manuellement, agencé de façon mobile sur au moins un (1a) des deux segments (1a, 1b), destiné à quitter la position fermée, et comprenant au moins deux boulons (7a, 7b) destinés à guider les segments (1a, 1b) dans des directions parallèles l'une à l'autre, étant entendu qu'au moins un premier boulon (7a) est agencé sur un côté et au moins un deuxième boulon (7b) sur l'autre côté du vissage, **caractérisé en ce que** les boulons (7a, 7b) peuvent être bloqués par un élément d'arrêt commun (49) réalisé comme dispositif d'actionnement, qui est agencé de façon mobile entre les boulons (7a, 7b) dans l'un des deux segments.

2. Écrou selon la revendication 1, **caractérisé en ce que** les segments (1a, 1b) sont chargés par des ressorts (45) dans la direction d'ouverture.

3. Écrou selon la revendication 2 ou 3, **caractérisé en ce qu'**au moins un premier ressort (45) est agencé sur un côté et au moins un deuxième ressort (45) sur l'autre côté du vissage.

4. Écrou selon l'une des revendications 2 à 4, **caractérisé en ce que** les ressorts (45) sont des ressorts cylindriques reposant dans des forages (10a, 10b) des segments, et **en ce que** les ressorts prennent appui à une extrémité contre une surface axiale réalisée sur le segment, par exemple un épaulement.

5. Écrou selon la revendication 4 ou 5, **caractérisé en ce que** les ressorts (45) reposent sur les boulons (7a, 7b), et **en ce que** les boulons (7a, 7b) font partie intégrante d'un guidage parallèle des segments (1a, 1b).

6. Écrou selon l'une des revendications précédentes, **caractérisé en ce que** l'élément d'arrêt (49) est doté d'un bouton poussoir (49a) en dehors du segment (1a).

7. Écrou selon l'une des revendications précédentes, **caractérisé par** des broches à déclic (47) agencées de façon coulissante dans un canal transversal (46) du segment (1a), qui s'engagent avec une de leurs extrémités dans l'élément d'arrêt (49) et avec leur autre extrémité dans le bouton (7a, 7b) correspondant.
